(19) Europäisches Patentamt
European Patent Office
Office européen des brevets

(11) EP 3 995 323 B1

(12) **EUROPEAN PATENT SPECIFICATION**

(45) Date of publication and mention of the grant of the patent:
**03.05.2023 Bulletin 2023/18**

(21) Application number: **21205570.1**

(22) Date of filing: **29.10.2021**

(51) International Patent Classification (IPC):
***B60C 11/00*** *(2006.01)* ***B60C 11/03*** *(2006.01)*
***B60C 13/00*** *(2006.01)*

(52) Cooperative Patent Classification (CPC):
**B60C 11/005; B60C 11/0332;** B60C 2011/0025; B60C 2011/0341; B60C 2013/006

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2020 JP 2020187229**

(43) Date of publication of application:
**11.05.2022 Bulletin 2022/19**

(73) Proprietor: **Sumitomo Rubber Industries, Ltd.**
**Kobe-shi, Hyogo-ken 651-0072 (JP)**

(72) Inventor: **TOMISAKE, Yukari**
**Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A2- 2 799 247**
**WO-A1-2018/118023**
**WO-A1-2019/244912**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

The present invention relates to a tire.

### BACKGROUND OF THE INVENTION

In recent years, as environmental regulations have become stricter, there has been an increasing demand for a tire having an excellent fuel efficiency. In particular, a tread, which greatly contributes to fuel efficiency, has been brought into a two-layer structure consisting of a base tread and a cap tread, and has been attempted to improve fuel efficiency of the base tread which is an internal member (that is, reduce heat generation). For example, a method of achieving both low heat generation and reinforcing properties using carbon black and silica in combination for a rubber composition of a base tread has been suggested (JP 2003-12866 A).
A tire in accordance with the preamble of claim 1 is known from WO 2019/244912 A1. Related tires are known from EP 2 799 247 A2 and WO 2018/118023 A1.

### SUMMARY OF THE INVENTION

However, this method has a problem that steering stability is lowered because hardness of a rubber is lowered and rigidity of a tire tread is reduced.
It is an object of the present invention to provide a tire having improved overall performance of fuel efficiency and steering stability.
The object is solved by a tire having the features of claim 1.
As a result of intensive studies for the above-described problem, the present inventor has found that, in a tire comprising a tread part composed of two or more layers, the tire having improved overall performance of fuel efficiency and steering stability can be obtained by, on top of setting a ratio of a center land part to a total area of land parts of a tread first layer within a predetermined range and making a value of tan δ of a rubber composition of a tread inner layer to be smaller than that of a rubber composition of a sidewall, extending the end of the tread inner layer into a sidewall part, and completed the present invention.
That is, the present invention relates to:

A tire comprising a tread part composed of two or more layers and a sidewall part,
the tread part composed of two or more layers comprising at least a tread first layer placed on the outermost side in a tire radial direction and a tread inner layer placed inside in the tire radial direction,
wherein the end of the tread inner layer extends into the sidewall part, and the tread inner layer is placed inner side in a tire width direction with respect to a sidewall in the sidewall part,
wherein a grounding surface of the tread first layer has two or more circumferential grooves, a pair of shoulder land parts and one or more of center land parts, and width direction grooves or the width direction grooves and sipes, the circumferential grooves extending continuously in a tire circumferential direction, both the pair of shoulder land parts and the one or more of center land parts being partitioned by the circumferential grooves, the pair of shoulder land parts being partitioned by the two circumferential grooves arranged at outermost location in the tire width direction, and the center land parts being arranged between the pair of shoulder land parts,
wherein, where a total area of the land parts is defined as Sr and a total area of the center land parts is defined as Sce, Sr and See satisfy the following inequality (1):

$$\text{Inequality (1): } 0.35 \leq Sce/Sr \leq 0.80,$$

wherein, where a loss tangent at 30°C of the rubber composition of the tread inner layer is defined as 30°C tan $\delta_{BT}$ and a loss tangent at 30°C of the rubber composition of the sidewall in the sidewall part is defined as 30°C tan $\delta_{SW}$, 30°C tan $\delta_{BT}$ and 30°C tan $\delta_{SW}$ satisfy the following inequality (2):

$$\text{Inequality (2): } 30°C \tan \delta_{BT} / 30°C \tan \delta_{SW} < 1,$$

and
wherein the 30°C tan $\delta_{BT}$, the Sr, and the See satisfy the following inequality (3):

$$\text{Inequality (3): } 30°\text{C} \tan \delta_{BT} \times (Sce/Sr) \leq 0.15.$$

PREFERABLE EMBODIMENTS

According to an embodiment of the invention, a value on the right side of the inequality (2) is 0.90, preferably 0.87, more preferably 0.85.

According to an embodiment of the invention, a value on the right side of the inequality (2) is 0.80, preferably 0.73, more preferably 0.60.

According to an embodiment of the invention, the 30°C tan $\delta_{BT}$, the Sr, and the See satisfy preferably 30°C tan $\delta_{BT} \times (Sce/Sr) \leq 0.10$,

more preferably 30°C tan $\delta_{BT} \times (Sce/Sr) \leq 0.080$,
further preferably 30°C tan $\delta_{BT} \times (Sce/Sr) \leq 0.060$, and
further preferably 30°C tan $\delta_{BT} \times (Sce/Sr) \leq 0.059$.

According to an embodiment of the invention, a value on the right side of the inequality (3) is 0.050, preferably 0.041.

According to an embodiment of the invention, a land part width of one independent center land part among the center land parts is twice or more, preferably 2.5 times or more, more preferably 3 times or more a groove depth of at least one circumferential groove adjacent to the independent center land part outside in the tire width direction.

According to an embodiment of the invention, the center land part has a sipe, the sipe extending so as to connect both edges in the width direction of the center land part, and wherein an angle $\theta$ formed by a straight line connecting both ends in the width direction of the sipe of the center land part and the circumferential groove is in a range of 65 to 80 degrees, preferably 70 to 80 degrees or 65 to 70 degrees.

According to an embodiment of the invention, where a length of the circumference of the tire is defined as La, and a sum of a total length of edge components in the width direction of the width direction grooves Lb1 and a total length of edge components in the width direction of the sipes Lb2 is defined as Lb, La and Lb satisfy the following inequality (4):

$$\text{Inequality (4): } 3 \leq Lb/La \leq 7,$$

preferably $3.5 \leq Lb/La \leq 6.5$,
more preferably $4.0 \leq Lb/La \leq 6.0$,
further preferably $4.5 \leq Lb/La \leq 5.5$.

According to an embodiment of the invention, in a tread surface of the tread first layer, where a grounding surface area of the tread surface is defined as St, and a sum of a total area of the circumferential grooves Sg1 and a total area of the width direction grooves and the sipes Sg2 is defined as Sg, St and Sg satisfy the following inequality (5):

$$\text{Inequality (5): } 0.20 \leq Sg/St \leq 0.40,$$

preferably $0.23 \leq Sg/St \leq 0.37$,
more preferably $0.25 \leq Sg/St \leq 0.35$,
further preferably $0.27 \leq Sg/St \leq 0.33$.

According to an embodiment of the invention, 30°C tan $\delta_{BT}$ is 0.07 or more and 0.15 or less, preferably 0.08 or more and 0.14 or less, more preferably 0.09 or more and 0.13 or less.

According to an embodiment of the invention, 30°C tan $\delta_{SW}$ is 0.10 or more and 0.18 or less, preferably 0.11 or more and 0.17 or less, more preferably 0.12 or more and 0.16 or less.

According to an embodiment of the invention, the rubber composition of the tread inner layer comprises silica and carbon black, and wherein a ratio of a content of the silica to a total content of the silica and the carbon black is 60% by mass or more, preferably 70% by mass or more, more preferably 80% by mass or more, further preferably 85% by mass or more, further preferably 88% by mass or more, further preferably 91% by mass or more, further preferably 92% by mass or more.

According to an embodiment of the invention, a height of the end of the tread inner layer in a tire cross-sectional

height is 33/40 or less, preferably 32/40, more preferably 28/40, further preferably 24/40, further preferably 20/40 the tire cross-sectional height.

According to an embodiment of the invention, the tire further comprises a clinch and a carcass, and wherein the height of the end of the tread inner layer in the tire cross-sectional height is higher than that of the upper end of the clinch or, when the height of the end of the tread inner layer is lower than that of the upper end of the clinch, the tread inner layer is placed inner side in the tire width direction with respect to the clinch via the carcass between the tread inner layer and the clinch.

According to an embodiment of the invention, the tire is a pneumatic tire for a passenger car

EFFECT OF THE INVENTION

According to the present invention, a pneumatic tire having improved overall performance of fuel efficiency and steering stability can be provided.

BRIEF DESCRIPTION OF THE DRAWINGS

FIG. 1 is a cross-sectional view of a tire meridian showing an example of the tire of the present invention.
FIG. 2 is a cross-sectional view of a tire meridian showing an example of the tire of the present invention.
FIG. 3 is a cross-sectional view of a tire meridian showing an example of the tire of Comparative example.
FIG. 4 is a partially developed view showing a tread pattern of the tire of the present invention.

DETAILED DESCRIPTION

The tire of the present invention is a tire comprising a tread part composed of two or more layers and a sidewall part, the tread part composed of two or more layers comprising at least a tread first layer placed on the outermost side in a tire radial direction and a tread inner layer placed inside in the tire radial direction, wherein the end of the tread inner layer extends into the sidewall part, and the tread inner layer is placed inner side in a tire width direction with respect to a sidewall in the sidewall part, wherein a grounding surface of the tread first layer has two or more circumferential grooves, a pair of shoulder land parts and one or more of center land parts, and width direction grooves or the width direction grooves and sipes, the circumferential grooves extending continuously in a tire circumferential direction, both the pair of shoulder land parts and one or more of center land parts being partitioned by the circumferential grooves, the pair of shoulder land parts being partitioned by the two circumferential grooves arranged at outermost location in the tire width direction, and the center land parts being arranged between the pair of shoulder land parts, wherein, where a total area of the land parts is defined as Sr and a total area of the center land parts is defined as Sce, Sr and See satisfy the inequality (1), and wherein, where a loss tangent at 30°C of the rubber composition of the tread inner layer is defined as 30°C tan $\delta_{BT}$ and a loss tangent at 30°C of the rubber composition of the sidewall in the sidewall part is defined as 30°C tan $\delta_{SW}$, 30°C tan $\delta_{BT}$ and 30°C tan $\delta_{SW}$ satisfy the inequality (2).

Although it is not intended to be bound by theory, the following can be considered as a mechanism for improving the overall performance of fuel efficiency and steering stability in the tire of the present invention. That is, in the tire of the present invention, steering stability is achieved by setting a ratio of areas of the center land parts (Sce) to a total area of the land parts of the tread (Sr) within a predetermined range to optimize rigidity of the land parts, while fuel efficiency is achieved by making 30°C tan $\delta_{BT}$ of the rubber composition of the tread inner layer to be smaller than 30°C tan $\delta_{SW}$ of the rubber composition of the sidewall and extending the end of the tread inner layer into the sidewall part to increase the ratio of the tread inner layer with a low rolling resistance, wherein the improvement of steering stability and the improvement of fuel efficiency by these two means are compatible with each other, and thus it is considered that, as a result, the overall performance of steering stability and fuel efficiency is improved.

A value on the right side of the inequality (2) is preferably 0.9 or less, more preferably 0.8 or less, further preferably 0.7 or less, further preferably 0.6 or less. It is thus considered that fuel efficiency is further improved.

The 30°C tan $\delta_{BT}$, the Sr, and the See preferably satisfy the inequality (3), and a value on the right side of the inequality (3) is more preferably 0.05. It is thus considered that the overall performance of steering stability and fuel efficiency improves.

The land part width of one independent center land part among the center land parts is preferably twice or more a groove depth of at least one circumferential groove adjacent to the independent center land part outside in the tire width direction. Because rigidity of the land parts can be increased, it is considered that a more excellent steering stability can be obtained.

It is preferable that the center land part has a sipe, the sipe extending so as to connect both edges in the width

direction of the center land part, and that an angle θ formed by a straight line connecting both ends in the width direction of the sipe of the center land part and the circumferential groove is in a range of 65 to 80 degrees. Because water layers within a grounding surface width can be scraped off at the time of kicking, it is considered that wet grip performance during running on a wet road surface can be well improved.

It is preferable that, where a length of the circumference of the tire is defined as La, and a sum of a total length of edge components in the width direction of the width direction grooves Lb1 and a total length of edge components in the width direction of the sipes Lb2 is defined as Lb, La and Lb satisfy the inequality (4). By optimizing the length of the edge components in the width direction of the width direction grooves and the sipes, it is considered that steering stability of the tire on a dry road surface and a wet road surface can be sufficiently improved.

It is preferable that, in a tread surface of the tread first layer, where a grounding surface area of the tread surface is defined as St, and a sum of a total area of the circumferential grooves Sg1 and a total area of the width direction grooves and the sipes Sg2 is defined as Sg, St and Sg satisfy the inequality (5). It is considered that drainage performance can be secured while maintaining rolling resistance, and that braking performance on a wet road surface can be maintained.

The tire is preferably a pneumatic tire for a passenger car. It is considered that effects of the present invention can be fully utilized.

[Tire]

Hereinafter, the tire of the present invention will be described with reference to the drawings as appropriate. Besides, the tire of the present invention is not limited to the following embodiments, but can be modified within the scope of the appended claims.

FIG. 1 is a cross-sectional view of a tire meridian of an example of the tire of the present invention. The tire comprises a tread part 1, a sidewall part 2, a clinch 3, and a carcass 4, the tread part 1 comprising a tread first layer 11 on the outermost side in the tire radial direction and a tread inner layer 12 inside in the tire radial direction. The end of the tread inner layer 12 (12E) extends into the sidewall part at a height position (H1) of 20/40 a tire cross-sectional height (HT) and is placed inner side in the tire width direction with respect to a sidewall. The upper end of the clinch 3 (3E) remains at a position (H2) of 10/40 the tire cross-sectional height (HT). Here, HT, H1, and H2 are values measured after dividing tires into two by a plane including a tire meridian and rim-assembling the obtained one into a standardized rim.

FIG. 2 is a cross-sectional view of a tire meridian of an example of the tire of the present invention, as in FIG. 1, but differs from FIG. 1 in that the end of the inner layer 12 of the tread (12E) extends into the sidewall part at a height position (H1) of 14/40 the tire cross-sectional height (HT) and that the upper end of the clinch 3 (3E) extends to a position (H2) of 24/40 the tire cross-sectional height (HT). Besides, the tread inner layer and the clinch are placed in the sidewall part with the carcass 4 interposed therebetween.

FIG. 3 is a cross-sectional view of a tire meridian of the tire of Comparative example with respect to the tire of the present invention, in which the end of the tread inner layer 12 (12E) is located at a height (H1) of 36/40 the tire cross-sectional height (HT) and does not reach the sidewall part. The upper end of the clinch 3 (3E) remains at a position (H2) of 10/40 the tire cross-sectional height (HT).

FIG. 4 is a partially developed view showing an example of a tread pattern of the tire of the present invention. On the tread part 1, a tread pattern, in which a direction of mounting onto a vehicle is specified, is formed. The tread pattern of the tread part 1 is formed in an asymmetrical shape with respect to a tire equator C.

The tread part 1 has an outer tread end To and an inner tread end Ti. The outer tread end To is located outside of the vehicle (on the right side in FIGS. 1 and 4) when mounted on the vehicle. The inner tread end Ti is located inside of the vehicle (on the left side in FIGS. 1 and 4) when mounted on the vehicle.

Each of the tread ends To and Ti is at a grounding position of the outermost end in a tire width direction W (the left-right direction in FIGS. 1 and 4, hereinafter simply referred to as a width direction W) when a standardized load is applied to a tire in a standardized state and the tire grounds a flat surface at a camber angle of 0 degree. The standardized state is a state where the tire is rim-assembled on a standardized rim and a standardized internal pressure is filled, and no load is applied. In the present specification, a dimension of each part of a tire (a tire cross-sectional width Wt, etc.) is a value measured in the above-described standardized state, unless otherwise specified. In the standardized state, a distance in the width direction W between the outer tread end To and the inner tread end Ti is defined as a tread width TW.

A "standardized rim" is a rim defined, for each tire in a standard system including a standard on which the tire is based, by the standard, i.e., a "standard rim" in JATMA, "Design Rim" in TRA, or "Measuring Rim" in ETRTO.

A "standardized internal pressure" is an air pressure defined, for each tire in a standard system including a standard on which the tire is based, by the standard, i.e., a "maximum air pressure" in JATMA, a maximum value described in Table "TIRE LOAD LIMITS AT VARIOUS COLD INFLATION PRESSURES" in TRA, or "INFLATION PRESSURE" in ETRTO.

A "standardized load" is a load defined, for each tire in a standard system including a standard on which the

tire is based, by the standard, i.e., a "maximum load capacity" in JATMA, a maximum value described in Table "TIRE LOAD LIMITS AT VARIOUS COLD INFLATION PRESSURES" in TRA, or "LOAD CAPACITY" in ETRTO.

The tire of the present invention is a tire comprising a tread part composed of two or more layers and a sidewall part, the tread part composed of two or more layers comprising at least a tread first layer on the outermost side in a tire radial direction and a tread inner layer inside in the tire radial direction. The tires in FIGS. 1 and 2 comprise a tread part 1, a sidewall part 2, a clinch 3, and a carcass 4, the tread part 1 comprising a tread first layer 11 on the outermost side in the tire radial direction and a tread inner layer 12 inside in the tire radial direction. The tread part 1 may further comprise one or more layers in addition to the tread first layer 11 and the tread inner layer 12. In that case, the tread inner layer 12 may be arranged in any order of layers as long as it is arranged inside in the tire radial direction with respect to the tread first layer 11, but, in certain embodiment, it is preferably arranged as the innermost layer inside in the tire radial direction.

In the tire of the present invention, the end of the tread inner layer extends into the sidewall part, the tread inner layer being placed inside in a tire width direction with respect to a sidewall in the sidewall part. It is preferable to adopt such configuration from the viewpoint of fuel efficiency. Here, "the end of the tread inner layer extends into the sidewall part" means that the height of the end of the tread inner layer in the tire cross-sectional height is at a position lower than the height of the upper end of the sidewall, as shown in FIGS. 1 and 2. The height of the end of the tread inner layer is preferably 33/40 or less, more preferably 32/40 or less, further preferably 28/40 or less, further preferably 24/40 or less, further preferably 20/40 or less the tire cross-sectional height (HT), from the viewpoint of fuel efficiency.

In the tire of the present invention, a grounding surface of the tread first layer has two or more circumferential grooves extending continuously in a tire circumferential direction, land parts partitioned by the circumferential grooves, the land parts including a pair of shoulder land parts partitioned by the two circumferential grooves located at both ends in the tire width direction and center land parts located between the pair of shoulder land parts, and width direction grooves or the width direction grooves and sipes.

In FIG. 4, three circumferential grooves 13, 14, and 15 are provided. However, the number of circumferential grooves is not particularly limited, and may be, for example, 2 to 5. Moreover, in the present invention, although the circumferential grooves 13, 14, and 15 extend linearly along the tire circumferential direction, they are not limited to such an embodiment, and may extend in, for example, a wavy shape, a sinusoidal shape, a zigzag shape, or the like along the tire circumferential direction.

Each groove width of the circumferential grooves 13, 14, and 15 can be arbitrarily determined according to the custom. In order to provide a sufficient drainage performance while maintaining a pattern rigidity of the tread part 1, each groove width of the circumferential grooves 13, 14, and 15 is preferably about 2.5% to 5% of the tread width TW, for example. Each groove depth of the circumferential grooves 13, 14, and 15 is, but not particularly limited to, preferably 5.0 to 12.0 mm, more preferably 6.0 to 11.0 mm, further preferably 7.0 to 10.0 mm.

In the present invention, the "shoulder land part" refers to a pair of land parts formed between a circumferential groove arranged at the outermost location in a width direction W from a tire equator C and each tread end To, Ti. In FIG. 4, an outer shoulder land part 16 formed between the circumferential groove 14 arranged at the outermost location and the outer tread end To when mounted on a vehicle and an inner shoulder land part 17 formed between the circumferential groove 13 arranged at the innermost location and the inner tread end Ti when mounted on the vehicle are provided, respectively.

In FIG. 4, the shoulder land parts 16 and 17 are provided with a plurality of shoulder width direction grooves 21 and 22 extending in a direction traverse to the shoulder land parts 16 and 17. The plurality of shoulder width direction grooves 21 and 22 are provided on the pair of shoulder land parts 16 and 17, respectively. Besides, in the present specification, the shoulder width direction groove provided on the outer shoulder land part 16 is referred to as an outer shoulder width direction groove 21. Moreover, the shoulder width direction groove provided on the inner shoulder land part 17 is referred to as an inner shoulder width direction groove 22.

In the present invention, the "center land part" refers to all land parts sandwiched between the pair of shoulder land parts. In FIG. 4, an outer center land part 18 formed between the circumferential groove 15 provided along the tire equator C and the circumferential groove 14 located on the outermost side when mounted on the vehicle and an inner center land part 19 formed between the circumferential groove 15 provided along the tire equator C and the circumferential groove 13 located on the innermost side when mounted on the vehicle are provided respectively. However, the number of the center land parts is not particularly limited, and may be, for example, 1 to 5.

In FIG. 4, the center land parts 18 and 19 are provided with a plurality of center width direction grooves 25 and 26 extending in a direction traverse to the center land parts 18 and 19 and a plurality of center sipes 27 and 28. The plurality of center width direction grooves 25 and 26 and the plurality of center sipes 27 and 28 are provided in the center land parts 18 and 19, respectively. Besides, in the present specification, the center width direction groove and the center sipe provided on the outer center land part 18 are referred to as an outer center width direction groove 25 and an outer center sipe 27, respectively. Moreover, the center width direction groove and the center sipe provided on the inner center land part 19 are referred to as an inner center width direction groove 26 and an inner center sipe 28, respectively.

Each groove width of the width direction grooves 21, 22, 25, and 26 is preferably about 2.5% to 5% of the tread width TW, for example. Each groove depth of the circumferential grooves 21, 22, 25, and 26 is, but not particularly limited to, preferably 5.0 to 12.0 mm, more preferably 6.0 to 11.0 mm, further preferably 7.0 to 10.0 mm. Besides, in the present specification, a "sipe" refers to a narrow notch having a width of 2.0 mm or less, preferably 0.5 to 1.5 mm.

The shoulder land parts 16 and 17 may be provided with shoulder narrow grooves extending in the tire circumferential direction (not shown). By providing such shoulder narrow grooves, the edge components in the tire circumferential direction are increased, thereby improving turning performance. Moreover, because rigidity of the shoulder land parts 16 and 17 in the tire circumferential direction is largely secured, running performance on a dry road is improved. Besides, the shoulder narrow grooves are not limited to an embodiment such that they extend linearly along the tire circumferential direction, and may extend in, for example, a wavy shape, a sinusoidal shape, or a zigzag shape along the tire circumferential direction. Each groove width of the shoulder narrow grooves is preferably 1.0% to 2.0% of the tread width TW, for example. Each groove depth of the shoulder narrow grooves is preferably 0.40 to 0.60 times a groove depth of the deepest part of the circumferential grooves 13, 14, and 15, for example.

The tire of the present invention is characterized in that, where a total area of the land parts is defined as Sr and a total area of the center land parts is defined as Sce, Sr and See satisfy the following inequality (1):

$$\text{Inequality (1): } 0.35 \leq Sce/Sr \leq 0.80$$

A value (Sce/Sr) in the inequality (1) is preferably 0.38 or more, more preferably 0.40 or more, further preferably 0.42 or more, further preferably 0.44 or more, further preferably 0.45 or more. Moreover, the value (Sce/Sr) in the inequality (1) is preferably 0.75 or less, more preferably 0.70 or less. By setting a ratio of a total area of the center land parts to a total area of the land parts of the tire within the above-described ranges, a volume of the center land parts can be increased, and rigidity of the land parts can be increased, and therefore a more excellent steering stability can be obtained.

Besides, in the present specification, a total area of the land parts Sr and a total area of the center land parts See are calculated, in a standardized state, from a grounding shape of a tread surface when a standardized load is applied to press the tread against a flat surface. Neither Sr nor See include areas of grooves and sipes. Moreover, in the present specification, the grounding shape can be obtained by mounting a tire on a standardized rim and holding a standardized internal pressure, and then applying an ink to, for example, the tread part 1, applying a standardized load to press the tread part 1 vertically against cardboard or the like (camper angle at 0°) and transferring the applied ink of the tread part 1 to the cardboard or the like.

The tire of the present invention is characterized in that, where a loss tangent at 30°C of the rubber composition of the tread inner layer is defined as 30°C tan $\delta_{BT}$ and a loss tangent at 30°C of the rubber composition of the sidewall in the sidewall part is defined as 30°C tan $\delta_{SW}$, 30°C tan $\delta_{BT}$ and 30°C tan $\delta_{SW}$ satisfy the following inequality (2):

$$\text{Inequality (2): } 30°C \tan \delta_{BT} / 30°C \tan \delta_{SW} < 1$$

Such feature is preferable from the viewpoint of fuel efficiency. A value in the inequality (2) (30°C tan $\delta_{BT}$/30°C tan $\delta_{SW}$) is preferably 0.95 or less, more preferably 0.90 or less, further preferably 0.85 or less, further preferably 0.80 or less. The 30°C tan $\delta_{BT}$ is preferably 0.07 or more, more preferably 0.08 or more, further preferably 0.09 or more, and it is preferably 0.15 or less, more preferably 0.14 or less, further preferably 0.13 or less. The 30°C tan $\delta_{SW}$ is preferably 0.10 or more, more preferably 0.11 or more, further preferably 0.12 or more, and it is preferably 0.18 or less, more preferably 0.17 or less, further preferably 0.16 or less.

Here, 30°C tan $\delta$ is a loss tangent measured under a condition of a temperature at 30°C, a frequency of 10 Hz, an initial strain of 10%, and a dynamic strain of 2% using a viscoelastic spectrometer VES for a vulcanized rubber test piece.

<Inequality (3)>

In the tire of the present invention, it is preferable that the 30°C tan $\delta_{BT}$, the Sr, and the See satisfy the following inequality (3):

$$\text{Inequality (3): } 30°C \tan \delta_{BT} \times (Sce/Sr) \leq 0.15$$

Such feature is preferable from the viewpoint of improving the overall performance of steering stability and fuel

efficiency. A value in the inequality (3) (30°C tan $\delta_{BT} \times$ (Sce/Sr)) is preferably 0.10 or less, more preferably 0.08 or less, further preferably 0.06 or less, further preferably 0.05 or less.

<Land part width of center land part and groove depth of adjacent circumferential groove>

In the tire of the present invention, from the viewpoint of increasing rigidity of the land parts to obtain an excellent steering stability, a land part width of one independent center land part is preferably twice or more, more preferably 2.5 times or more, further preferably 3 times or more a groove depth of at least one circumferential groove adjacent to the independent center land part outside in the tire width direction. The land part width is, but not particularly limited to, preferably 10 mm or more, more preferably 15 mm or more, further preferably 20 mm or more, and it is preferably 60 mm or less, more preferably 50 mm or less, further preferably 40 mm or less. The groove depth is, but not particularly limited to, preferably 5.0 mm or more, more preferably 6.0 mm or more, further preferably 7.0 mm or more, and it is preferably 12.0 mm or less, more preferably 11.0 mm or less, further preferably 10.0 mm or less. Besides, in the present specification, both the land part width and the groove depth are measured in a standardized state.

<Angle $\theta$ between sipe of center land part and circumferential groove>

In the tires of the present invention, it is preferable that the center land part has a sipe, the sipe extending so as to connect both edges in the width direction of the center land part, and that an angle $\theta$ formed by a straight line connecting both ends in the width direction of the sipe of the center land part and the circumferential groove is in a range of 65 to 80 degrees. For example, in FIG. 4, the center land parts 18 and 19 have sipes 27 and 28, the sipes 27 and 28 extending so as to connect both edges in the width direction W of the center land parts 18 and 19. Here, it is preferable that the angle ($\theta$) formed by the straight line connecting both ends in the width direction W of the sipe 27 and the circumferential groove 14 or the angle ($\theta$) formed by the straight line connecting both ends in the width direction W of the sipe 28 and the circumferential groove 13 is in a range of 65 to 80 degrees. In this case, water layers can be scraped out at the center land parts 18 and 19, and therefore braking performance on a wet road surface can be improved. Besides, in the present specification, the angle $\theta$ is calculated, in a standardized state, from a grounding shape when a standardized load is applied to press the tread against a flat surface.

<Inequality (4)>

In the tire of the present invention, it is preferable that, where a length of the circumference of the tire is defined as La, and a sum of a total length of edge components in the width direction of the width direction grooves Lb1 and a total length of edge components in the width direction of the sipes Lb2 is defined as Lb, La and Lb satisfy the following inequality (4):

$$\text{Inequality (4): } 3 \leq Lb/La \leq 7$$

A value (Lb/La) in the inequality (4) is preferably 3.5 or more, more preferably 4.0 or more, further preferably 4.5 or more, from the viewpoint of steering stability. Moreover, the value (Lb/La) in the inequality (4) is preferably 6.5 or less, more preferably 6.0 or less, further preferably 5.5 or less.

In FIG. 4, with respect to a length of the circumference of the tire La, a total length of the edge components in the width direction W of the width direction grooves 21, 22, 25, and 26 corresponds to Lb1, a total length of the edge components in the width direction W of the sipes 27 and 28 corresponds to Lb2, and a sum of these Lb1 and Lb2 corresponds to Lb. By setting a relationship between a length of the edge components of the width direction grooves 21, 22, 25, and 26 and sipe 27 and 28 and a length of the circumference of the tire La within the above-described ranges, deformation of the tread part 1 can be set within a predetermined range, and areas of the land parts 16, 17, 18, and 19 of the tread part 1 can be secured as not less than a predetermined value, thereby allowing for improvement in steering stability.

Besides, the "length of the edge components in the width direction W" of the width direction grooves 21, 22, 25, and 26 and the sipe 27 and 28 refers to a projected length in the width direction W of the width direction grooves 21, 22, 25, and 26 and the sipe 27 and 28 (a width direction component, among a width direction component and a circumferential direction component).

Moreover, a ratio Lb1/La of a length La of the circumference of the tire and a total length Lb 1 of the edge components in the width direction W of the width direction grooves 21, 22, 25, and 26 is preferably 2.0 to 6.5, preferably 2.2 to 6.3, more preferably 2.5 to 6.0. By setting a relationship between a total length Lb1 of the edge components in the width direction W of the width direction grooves 21, 22, 25, and 26 and a length La of the circumference of the tire

within the above-described ranges, steering stability can be further improved.

Moreover, a ratio $Lb_{sh}/Lb_{ce}$ of a total length $Lb_{sh}$ of the edge components in the width direction W of the width direction grooves 21 and 22 in the shoulder land parts 16 and 17 to a sum $Lb_{ce}$ of a total length $Lb_{ce1}$ of the edge components in the width direction W of the width direction grooves 25 and 26 in the center land parts 18 and 19 and a total length $Lb_{ce2}$ of the edge components in the width directions W of the sipes 27 and 28 in the center land parts 18 and 19 preferably satisfies $Lb_{sh}/Lb_{ce}<1$. In this case, the edge components in the shoulder land parts 16 and 17 are reduced, thereby increasing rigidity of the shoulder land parts 16 and 17. As a result, abrasion of the shoulder land parts 16 and 17 is suppressed, thereby allowing for improvement in steering stability.

Besides, in the present specification, the La, the Lb, the Lb1, and the Lb2 are all measured in a standardized state.

<Inequality (5)>

In the tire of the present invention, it is preferable that, in a tread surface, where a grounding surface area of the tread surface is defined as St, and a sum of a total area of the circumferential grooves Sg1 and a total area of the width direction grooves and the sipes Sg2 is defined as Sg, St and Sg satisfy the following inequality (5):

$$\text{Inequality (5): } 0.20 \le Sg/St \le 0.40$$

A value (Sg/St) in the inequality (5) is preferably 0.23 or more, more preferably 0.25 or more, further preferably 0.27 or more. Moreover, the value (Sg/St) in the inequality (5) is preferably 0.37 or less, more preferably 0.35 or less, further preferably 0.33 or less.

Sg1/St is preferably 0.13 or more, more preferably 0.14 or more, further preferably 0.15 or more. Moreover, Sg1/St is preferably 0.20 or less, more preferably 0.19 or less, further preferably 0.18 or less.

Sg2/St is preferably 0.10 or more, more preferably 0.11 or more, further preferably 0.12 or more. Moreover, Sg1/St is preferably 0.17 or less, more preferably 0.16 or less, further preferably 0.15 or less.

By setting the value (Sg/St) in the inequality (5) within the above-described ranges, rigidity of the land parts of the tread can be increased. When the value (Sg/St) in the inequality (5) is less than the above-described ranges, a ratio of the land parts becomes too large, so that drainage performance and grip performance tend to decrease. On the other hand, when the value (Sg/St) in the inequality (5) exceeds the above-described ranges, a sufficient rigidity of the land parts of the tread cannot be obtained, so that steering stability tends to decrease.

Besides, in the present specification, the "grounding surface area (St) of the tread surface" is calculated, in a standardized state, from a grounding shape of the tread surface when a standardized load is applied to press the tread against a flat surface. St is a total area also including parts of grooves and sipes. Moreover, the total area of the circumferential grooves Sg1 and the total area of the width direction grooves and the sipes Sg2 are also calculated, in a standardized state, from a grounding shape of a tread surface when a standardized load is applied to press the tread against a flat surface. Sg is a sum of Sg1 and Sg2.

<Arrangement of inner layer of tread and clinch>

In the tire of the present invention, it is preferable that the height of the end of the tread inner layer in the tire cross-sectional height (HT) is higher than that of the upper end of the clinch or, when the height of the end of the tread inner layer is lower than that of the upper end of the clinch, the tread inner layer is placed inner side in the tire width direction with respect to the clinch via the carcass between the tread inner layer and the clinch. There is a large difference in rubber hardness between the tread inner layer and the clinch, but with such configuration, the tread inner layer and the clinch do not come into contact with each other, so that deterioration of durability can be prevented. For example, in FIG. 1, the height of the end of the tread inner layer 12 (12E) is higher than that of the upper end of the clinch (3E), and in FIG. 2, the height of the end of the tread inner layer 12 (12E) is lower than that of the upper end of the clinch 3 (3E), but the tread inner layer 12 and the clinch 3 are not in contact with each other because they are arranged in the sidewall part via the carcass 4 therebetween.

[Rubber composition]

The rubber composition of the tire of the present invention can be produced by a conventional method in the tire industry. In particular, among the rubber compositions of the tires of the present invention, a value of 30°C tan δ of the rubber composition of the tread inner layer is smaller than a value of 30°C tan δ of the rubber composition of the sidewall. However, such values can be adjusted by the conventional method in the tire industry.

Specifically, a value of 30°C tan δ can be adjusted by types and amounts of chemicals (particularly, a rubber

component, a filler, a softening agent, sulfur, a vulcanization accelerator, a silane coupling agents) to be compounded in a rubber composition. For example, 30°C tan δ tends to be lowered by using a rubber component with few unsaturated bonds, using a softening agent with a high compatibility with the rubber component, using a modified rubber, using silica as a filler, reducing an amount of oil as a plasticizing agent, increasing an amount of sulfur, increasing an amount of a vulcanization accelerator, or increasing an amount of a silane coupling agent. Therefore, a person skilled in the art can appropriately adjust the value of 30°C tan δ according to a target value of 30°C tan δ.

Chemicals that can be used for the rubber compositions of the tires of the present invention, particularly the rubber composition of the tread first layer, the tread inner layer, or the sidewall will be described below.

<Rubber component>

The rubber composition according to the present invention preferably comprises at least one selected from the group consisting of an isoprene-based rubber, a styrene-butadiene rubber (SBR), and a butadiene rubber (BR) as a rubber component, more preferably comprises a SBR, further preferably comprises a SBR and a BR, and may comprises a rubber component consisting only of a SBR and a BR.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated additives of these SBRs (hydrogenated SBRs) and the like can also be used. These SBRs may be used alone, or two or more thereof may be used in combination.

Examples of the S-SBR that can be used in the present invention include S-SBRs manufactured and sold by JSR Corporation, Sumitomo Chemical Co., Ltd., Ube Industries, Ltd., Asahi Kasei Corporation, ZS Elastomer Co., Ltd., etc.

A styrene content of the SBR is preferably 10% by mass or more, more preferably 15% by mass or more, further preferably 20% by mass or more, from the viewpoints of wet grip performance and abrasion resistance. Moreover, it is preferably 60% by mass or less, more preferably 55% by mass or less, further preferably 50% by mass or less, from the viewpoints of temperature dependence of grip performance and blow resistance. Besides, in the present specification, the styrene content of the SBR is calculated by $^{1}H$-NMR measurement.

A vinyl content of the SBR is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, in the present specification, the vinyl content of the SBR (1,2-bond butadiene unit amount) is measured by infrared absorption spectrometry.

A weight-average molecular weight (Mw) of the SBR is preferably 200,000 or more, more preferably 250,000 or more, further preferably 300,000 or more, from the viewpoint of wet grip performance. Moreover, the weight-average molecular weight is preferably 2,000,000 or less, more preferably 1,800,000 or less, further preferably 1,500,000 or less, from the viewpoint of cross-linking uniformity. Besides, in the present specification, the weight-average molecular weight of the SBR can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

A content of the SBR when compounded in 100% by mass of the rubber component is preferably 30% by mass or more, more preferably 35% by mass or more, further preferably 40% by mass or more, from the viewpoint of the effects of the present invention. Moreover, the content of the SBR is preferably 90% by mass or less, more preferably 85% by mass or less, further preferably 80% by mass or less.

(BR)

A BR is not particularly limited, and those common in the tire industry can be used such as, for example, a BR having a cis 1,4 bond content (cis content) of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BR may be used alone, or two or more thereof may be used in combination.

Examples of modified BRs include those obtained by adding a tin compound after polymerizing 1,3-butadiene by a lithium initiator, and further those in which the terminal of the modified BR molecule has tin-carbon bond (a tin-modified BR), a butadiene rubber (a modified BR for silica) having a condensed alkoxysilane compound at its active terminal, and the like. Examples of such modified BRs include, for example, a tin-modified BR and a modified BR for silica manufactured and sold by ZS Elastomer Co., Ltd., etc.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

A content of the BR when compounded in 100% by mass of the rubber component is preferably 10% by mass or more, more preferably 15% by mass or more, further preferably 20% by mass or more, from the viewpoint of the effects of the present invention. Moreover, the content of the BR is preferably 70% by mass or less, more preferably 65% by mass or less, further preferably 60% by mass or less.

(Isoprene-based rubber)

As an isoprene-based rubber, for example, those common in the tire industry can be used, such as an isoprene rubber (IR) and a natural rubber. Examples of the natural rubber includes a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber when compounded in 100% by mass of the rubber component is preferably 30% by mass or less, more preferably 20% by mass or less, further preferably 10% by mass or less, from the viewpoint of the effects of the present invention. Moreover, a lower limit value of the content of the isoprene-based rubber when compounded is not particularly limited and may be 0% by mass.

(Other rubber components)

As the rubber components according to the present invention, rubber components other than the above-described isoprene-based rubbers, SBRs, and BRs may be included. As other rubber components, cross-linkable rubber components commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination. Contents of other rubbers in the rubber component may be 0% by mass.

<Filler>

The rubber composition according to the present invention preferably comprises silica as a filler, and more preferably comprises carbon black and silica.

(Carbon black)

As carbon black, those commonly used in the tire industry can be appropriately utilized, examples of which include N134, N110, N220, N234, N219, N339, N330, N326, N351, N550, N762, and the like. These carbon black may be used alone, or two or more thereof may be used in combination.

A nitrogen adsorption specific surface area ($N_2SA$) of carbon black is preferably 80 $m^2/g$ or more, more preferably 90 $m^2/g$ or more, further preferably 100 $m^2/g$ or more, from the viewpoint of reinforcing property. Moreover, the $N_2SA$ is preferably 200 $m^2/g$ or less, more preferably 170 $m^2/g$ or less, further preferably 155 $m^2/g$ or less, from the viewpoints of fuel efficiency and processability. Besides, the $N_2SA$ of carbon black is a value measured according to JIS K 6217-2: "Carbon black for rubber industry-Fundamental characteristics-Part 2: Determination of specific surface area-Nitrogen adsorption methods-Single-point procedures".

A content of carbon black when compounded based on 100 parts by mass of the rubber component is preferably

1 part by mass or more, more preferably 3 parts by mass or more, further preferably 5 parts by mass or more, from the viewpoints of abrasion resistance and wet grip performance. Moreover, it is preferably 50 parts by mass or less, more preferably 35 parts by mass or less, further preferably 20 parts by mass or less, particularly preferably 10 parts by mass or less, from the viewpoint of fuel efficiency.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone, or two or more thereof may be used in combination.

A nitrogen adsorption specific surface area ($N_2SA$) of silica is preferably 140 $m^2/g$ or more, further preferably 170 $m^2/g$ or more, from the viewpoints of fuel efficiency and abrasion resistance. Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica in the present specification is a value measured by a BET method according to ASTM D3037-93.

A content of silica when compounded based on 100 parts by mass of the rubber component is preferably 20 parts by mass or more, more preferably 40 parts by mass or more, further preferably 50 parts by mass or more, particularly preferably 60 parts by mass or more, from the viewpoint of wet grip performance. Moreover, it is preferably 130 parts by mass or less, more preferably 120 parts by mass or less, further preferably 110 parts by mass or less, from the viewpoint of abrasion resistance.

A total content of silica and carbon black when compounded based on 100 parts by mass of the rubber component is preferably 40 parts by mass or more, more preferably 50 parts by mass or more, further preferably 60 parts by mass or more, from the viewpoint of abrasion resistance. Moreover, it is preferably 160 parts by mass or less, more preferably 140 parts by mass or less, further preferably 120 parts by mass or less, from the viewpoints of fuel efficiency and elongation at break.

A ratio of a content of silica to a total content of silica and carbon black is preferably 60% by mass or more, more preferably 70% by mass or more, further preferably 80% by mass or more, particularly preferably 85% by mass or more.

(Other fillers)

As fillers other than silica and carbon black, those commonly used in the tire industry can be compounded, such as aluminum hydroxide, calcium carbonate, alumina, clay, and talc.

(Silane coupling agent)

Silica is preferably used in combination with a silane coupling agent. The silane coupling agent is not particularly limited, and a silane coupling agent conventionally used in combination with silica in the tire industry can be used, examples of which include, for example, mercapto-based silane coupling agents described below; sulfide-based silane coupling agents such as bis(3-triethoxysilylpropyl)disulfide and bis(3-triethoxysilylpropyl)tetrasulfide; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxy, and the like. Among them, sulfide-based silane coupling agents and/or mercapto-based silane coupling agents are preferable, and mercapto-based silane coupling agents are more preferable. These silane coupling agents may be used alone, or two or more thereof may be used in combination.

It is preferable that the mercapto-based silane coupling agent is a compound represented by the following formula (7) and/or a compound comprising a bond unit A represented by the following formula (8) and a bond unit B represented by the following formula (9).

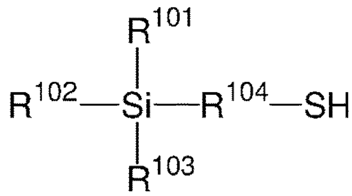

(7)

(wherein, $R^{101}$, $R^{102}$, and $R^{103}$ each independently represents a group represented by an alkyl having 1 to 12 carbon atoms, an alkoxy having 1 to 12 carbon atoms, or $-O-(R^{111}-O)_z-R^{112}$ ($R^{111}$s of z pieces each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

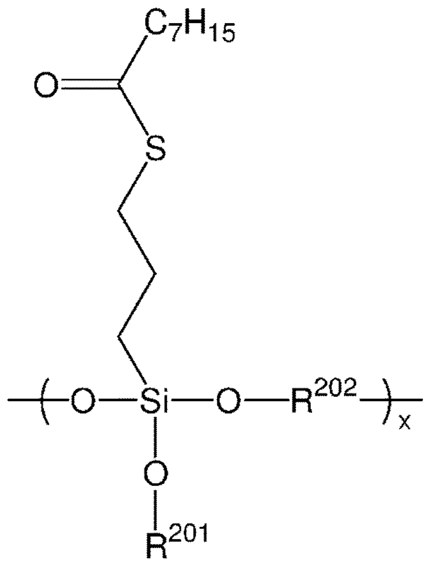

(8)

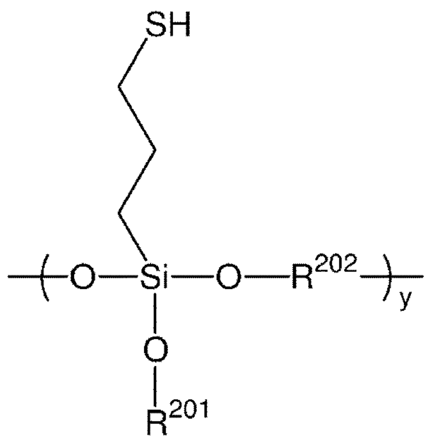

(9)

(wherein, x represents an integer of 0 or more; y represents an integer of 1 or more; $R^{201}$ represents hydrogen atom, or an alkyl having 1 to 30 carbon atoms, an alkenyl having 2 to 30 carbon atoms or an alkynyl having 2 to 30 carbon atoms, each of the alkyl, the alkenyl and the alkynyl optionally being substituted with a halogen atom, hydroxyl, or carboxyl; and $R^{202}$ represents an alkylene having 1 to 30 carbon atoms, an alkenylene having 2 to 30 carbon atoms, or an alkynylene having 2 to 30 carbon atoms; and $R^{201}$ and $R^{202}$ may together form a ring structure.)

Examples of the compound represented by the formula (7) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following chemical formula (10) (Si363 manufactured by Evonik Degussa GmbH), and the like. Among them, the compound represented by the following chemical formula (10) can be appropriately used. They may be used alone, or two or more thereof may be used in combination.

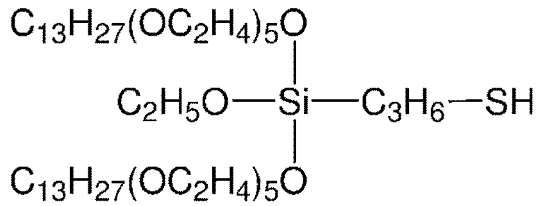

(10)

Examples of the compound comprising the bond unit A represented by the formula (8) and the bond unit B represented by the formula (9) include, for example, those manufactured and sold by Momentive Performance Materials, etc. They may be used alone, or two or more thereof may be used in combination.

A content of the silane coupling agent based on 100 parts by mass of silica (a total amount of a plurality of silane coupling agents when used in combination) is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

As a filler, other fillers may be used in addition to carbon black and silica. Such filler is not particularly limited, and any filler commonly used in this field such as, for example, aluminum hydroxide, alumina (aluminum oxide), calcium carbonate, magnesium sulfate, talc, and clay can be used. These fillers may be used alone, or two or more thereof may be used in combination.

(Other compounding agents)

The rubber composition according to the present invention can appropriately comprise compounding agents conventionally and generally used in the tire industry, for example, a softening agent, wax, processing aid, stearic acid, zinc oxide, an antioxidant, a vulcanizing agent, a vulcanization accelerator, and the like, in addition to the above-described components.

<Softening agent>

The rubber composition according to the present invention preferably comprises a softening agent. Examples of the softening agent include, for example, resin, oil, a liquid rubber, an ester-based plasticizing agent, and the like. The softening agent may be used alone, or two or more thereof may be used in combination.

Resin is not particularly limited, examples of which include a petroleum resin, a terpene-based resin, a rosin-based resin, a phenol-based resin, and the like, which are commonly used in the tire industry. Resin may be used alone, or two or more thereof may be used in combination.

Examples of the petroleum resin include a C5-based petroleum resin, an aromatic-based petroleum resin, a C5-C9-based petroleum resin, and the like. The petroleum resin may be used alone, or two or more thereof may be used in combination.

The C5-based petroleum resin refers to a resin obtained by polymerizing a C5 fraction. Examples of the C5 fraction include, for example, a petroleum fraction having 4 to 5 carbon atoms such as cyclopentadiene, a pentene, a pentadiene, and isoprene. As the C5-based petroleum resin, a dicyclopentadiene resin (DCPD resin) is appropriately used.

The aromatic-based petroleum resin" refers to a resin obtained by polymerizing a C9 fraction, and may be hydrogenated or modified. Examples of the C9 fraction include, for example, a petroleum fraction corresponding to 8 to 10 carbon atoms such as vinyltoluene, an alkylstyrene, indene, and a methyl indene. As specific examples of the aromatic-based petroleum resin, for example, a coumarone indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As an aromatic vinyl-based resin, for example, those commercially available from Kraton Corporation, Eastman Chemical Company, etc. can be used.

The C5-C9-based petroleum resin refers to a resin obtained by copolymerizing the C5 fraction and the C9 fraction, and may be hydrogenated or modified. Examples of the C5 fraction and the C9 fraction include the above-described petroleum fractions. As a C5-C9-based petroleum resin, those commercially available from, for example, Tosoh Corporation, Zibo Luhua Hongjin New Material Co., Ltd., etc. can be appropriately used.

Examples of the terpene-based resin include a polyterpene resin consisting of at least one selected from terpene compounds such as α-pinene, β-pinene, limonene, and a dipentene; an aromatic-modified terpene resin made from the terpene compound and an aromatic compound; a terpene phenol resin made from a terpene compound and a phenol-based compound; and those in which these terpene-based resins are hydrogenated (hydrogenated terpene-based resins). Examples of the aromatic compound used as a raw material for the aromatic-modified terpene resin include, for example, styrene, $\alpha$-methylstyrene, vinyltoluene, a divinyltoluene, and the like. Examples of the phenol-based compound used as a raw material for the terpene phenol resin include, for example, phenol, bisphenol A, cresol, xylenol, and the like. The terpene-based resin may be used alone, or two or more thereof may be used in combination.

Example of the rosin-based resin include, but not particularly limited to, for example, a natural resin rosin and a rosin-modified resin obtained by modifying it by hydrogenation, disproportionation, dimerization, esterification, or the like. The rosin-based resin may be used alone, or two or more thereof may be used in combination.

Examples of the phenol-based resin include, but not particularly limited to, a phenol formaldehyde resin, an alkylphenol formaldehyde resin, an alkylphenol acetylene resin, an oil-modified phenol formaldehyde resin, and the like. The phenol-based resin may be used alone, or two or more thereof may be used in combination.

A softening point of resin is preferably 60°C or higher, more preferably 65°C or higher, from the viewpoint of wet grip performance. Moreover, it is preferably 150°C or lower, more preferably 140°C or lower, further preferably 130°C or lower, from the viewpoints of processability and improvement in dispersibility of a rubber component and a filler. Besides, the softening point in the present specification can be defined as a temperature at which a sphere drops when the softening point specified in JIS K 6220-1: 2001 is measured with a ring and ball softening point measuring device.

A content of resin when compounded based on 100 parts by mass of the rubber component is preferably 1 part by mass or more, more preferably 3 parts by mass or more, further preferably 5 parts by mass or more, from the viewpoint of wet grip performance. Moreover, it is preferably 60 parts by mass or less, more preferably 40 parts by mass or less, further preferably 20 parts by mass or less, particularly preferably 15 parts by mass or less, from the viewpoint of suppressing heat generation.

Examples of oil include, for example, process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic (PCA) compound can also be used. Examples of the low PCA content process oil include a mild extraction solution (MES), a treated distillate aromatic extract (TDAE), a heavy naphthenic oil, and the like. Oil may be used alone, or two or more thereof may be used in combination.

A content of oil when compounded based on 100 parts by mass of the rubber component is preferably 5 parts by mass or more, more preferably 10 parts by mass or more, further preferably 15 parts by mass or more, from the viewpoint of processability. Moreover, it is preferably 60 parts by mass or less, more preferably 40 parts by mass or less, further preferably 30 parts by mass or less, from the viewpoint of abrasion resistance. Besides, in the present specification, the content of oil also includes an amount of oil contained in an oil-extended rubber.

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 2 parts by mass or more, further preferably 3 parts by mass or more, particularly preferably 5 parts by mass or more. Moreover, the content of the liquid rubber is preferably 50 parts by mass or less, more preferably 40 parts by mass or less, further preferably 20 parts by mass or less.

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone or two or more thereof may be used in combination.

A content of the ester-based plasticizing agent when compounded based on 100 parts by mass of the rubber component is preferably 1 part by mass or more, more preferably 2 parts by mass or more, further preferably 3 parts by mass or more, particularly preferably 5 parts by mass or more. Moreover, the content of the ester-based plasticizing agent is preferably 50 parts by mass or less, more preferably 40 parts by mass or less, further preferably 20 parts by mass or less.

A content of the softening agent when compounded based on 100 parts by mass of the rubber component (a total amount of a plurality of softening agents when used in combination) is preferably 5 parts by mass or more, more preferably 10 parts by mass or more, further preferably 15 parts by mass or more, from the viewpoint of wet grip performance. Moreover, it is preferably 120 parts by mass or less, more preferably 100 parts by mass or less, further preferably 50 parts by mass or less, particularly preferably 40 parts by mass or less, from the viewpoint of processability.

(Wax)

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of preventing whitening of a tire due to bloom.

(Processing aid)

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 8 parts by mass or less, from the viewpoints of abrasion resistance and breaking strength.

(Antioxidant)

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

(Stearic acid)

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

(Zinc oxide)

A content of zinc oxide when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of abrasion resistance.

(Vulcanizing agent)

Sulfur is appropriately used as a vulcanizing agent. As sulfur, a powdery sulfur, oil a processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd.,

LANXESS, Flexsys, etc. can be used.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, 2,2'-dibenzothiazolyl disulfide, and the like. Among them, 2-mercaptobenzothiazole is preferable.

A content of the vulcanization accelerator when compounded based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

[Production]

The rubber composition according to the present invention can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

The kneading condition is not particularly limited. Examples of kneading include, in the base kneading step, a method of kneading at a discharge temperature at 150 to 170°C for 3 to 10 minutes, and in the final kneading step, a method of kneading at 70 to 110°C for 1 to 5 minutes. The vulcanization condition is not particularly limited. Examples of vulcanization include a method of vulcanizing at 150 to 200°C for 10 to 30 minutes.

The tire of the present invention composed of the rubber composition can be produced by a usual method using the rubber composition. That is, the tire can be manufactured by extruding an unvulcanized rubber composition, obtained by mixing each of the above-described components as necessary with the rubber component, into a shape of a tread first layer, a tread inner layer, or a sidewall, attaching it with other tire members on a tire forming machine, and molding them by a usual method to form an unvulcanized tire, followed by heating and pressurizing this unvulcanized tire in a vulcanizing machine.

[Application]

The rubber composition can be used for treads of various tires, for example, a tire for a passenger car; a tire for a truck/bus; a tire for a two-wheeled vehicle; a high-performance tire; an all-season tire; a summer tire; and a winter tire such as a studless tire. Among them, it is preferably used for at least one of tires such as a tire for a passenger car and a summer tire.

EXAMPLE

The present invention will be specifically described below based on Examples, but the present invention is not limited to Examples only.

<Various chemicals>

Various chemicals used in Examples and Comparative examples are collectively shown.

SBR1: HPR850 manufactured by JSR Corporation (styrene content: 27.5% by mass, vinyl content: 59.0% by mass, non-oil-extended product)
SBR2: SPRINTAN SLR6430 manufactured by TRINSEO (styrene content: 40% by mass, vinyl content: 24% by mass, Mw: 1,460,000, oil-extended product containing 37.5 parts by mass of a TDAE oil based on 100 parts by mass of a solid content)
BR1: UBEPOL BR (Registered Trademark) 150B manufactured by Ube Industries, Ltd. (cis content: 97%, Mw: 440,000)
BR2: ASAPRENE N103 manufactured by Asahi Kasei Corporation (cis content: 38% by mass, Mw: 550,000)
Carbon Black: DIABLACK N220 manufactured by Mitsubishi Chemical Corporation ($N_2SA$: 115 $m^2/g$)
Silica: ULTRASIL (Registered Trademark) VN3 manufactured by Evonik Degussa GmbH ($N_2SA$: 175 $m^2/g$)
Silane coupling agent 1: Si266 manufactured by Evonik Degussa GmbH (bis(3-triethoxysilylpropyl)disulfide)
Silane coupling agent 2: NXT-Z45 manufactured by Momentive Performance Materials (mercapto-based silane coupling agent: a copolymer of a bond unit A (55 mol%) and a bond unit B (45 mol%))
Oil: VivaTec 500 manufactured by H8vR Group (TDAE oil)
Antioxidant: Antigen 6C manufactured by Sumitomo Chemical Co., Ltd. (N-(1,3-dimethylbutyl)-N'-phenyl-p-phenylenediamine)
Stearic acid: Bead stearic acid "CAMELLIA" manufactured by NOF CORPORATION
Zinc oxide: Zinc oxide No. 1 manufactured by Mitsui Mining 8v Smelting Co., Ltd.
Resin: Sylvatraxx 4401 manufactured by Kraton Corporation (copolymer of $\alpha$-methylstyrene and styrene, softening point: 85°C)
Sulfur: HK 200-5 manufactured by Hosoi Chemical Industry Co., Ltd. (5% oil containing sulfur)
Vulcanization accelerator 1: Nocceler CZ manufactured by Ouchi Shinko Chemical Industry Co., Ltd. (N-cyclohexyl-2-benzothiazolylsulfenamide)
Vulcanization accelerator 2: Nocceler D manufactured by Ouchi Shinko Chemical Industry Co., Ltd. (DPG, 1,3-diphenylguanidine)

<Manufacturing of test vulcanized rubber sheet and test tire>

According to the compounding amounts shown in Table 1, using a 1.7 L closed Banbury mixer, all chemicals other than sulfur and vulcanization accelerators were kneaded at a discharge temperature at 160°C for 4 minutes to obtain a kneaded product. Next, using an open roll, sulfur and vulcanization accelerators were added to the obtained kneaded product, and the mixture was kneaded for 4 minutes to obtain an unvulcanized rubber composition. Furthermore, the obtained unvulcanized rubber composition was press-vulcanized under a condition at 170°C for 12 minutes to obtain a test vulcanized rubber sheet.

Moreover, each of the obtained unvulcanized rubber composition was extruded into a shape of a tread first layer, a tread inner layer, or a sidewall as shown in Table 2, and attached together with other members to prepare a raw tire. Next, in a vulcanization step, the tire was subjected to press molding at 170°C for 20 minutes to obtain a test tire with 195/65R15 size. Here, in Table 2, each value of Sce, Sr, $\theta$, Sg (Sg1, Sg2), and St is a value calculated from a grounding shape when a standardized load is applied to press a tread against a flat surface in a standardized state as described above, and land part widths of the center land parts, groove depths of the circumferential grooves adjacent to the center land parts outside in the tire width direction, La and Lb (Lb1, Lb2) are values measured in the standardized state as described above. Moreover, HT, H1, and H2 are values measured after dividing tires into two by a plane including a tire meridian and rim-assembling the obtained one into a standardized rim, as described above.

<Evaluation>

Evaluation methods are shown below. As for performance target values in Examples, an overall performance index obtained by summing a fuel efficiency index and a steering stability index is 200 or more.

(Measurement of tan $\delta$)

For the test vulcanized rubber sheet, using a viscoelastic spectrometer VES (manufactured by Iwamoto Seisakusho Co., Ltd.), a loss tangent (30°C tan $\delta$) was measured under a condition at a temperature of 30°C, a frequency of 10 Hz, an initial strain of 10%, and a dynamic strain of 2%.

(Fuel efficiency)

Using a rolling resistance tester, a rolling resistance when each test tire was run with a rim (15 × 6JJ), an internal pressure (230 kPa), a load (3.43 kN), and a speed (80 km/h) was measured and indicated as an index with the reference Comparative example (Comparative example 1) being as 100 (a rolling resistance index). The results show that the larger the index is, the smaller the rolling resistance is and the more excellent the fuel efficiency is.

(Steering stability)

Each test tire was mounted on all wheels of a vehicle (domestic FF vehicle, displacement of 2000cc), and the vehicle ran a loop test course on a dry asphalt road surface, and the lap time at that time was measured. Steering stability was indicated as an index by the following equation. The results show that the larger the index is, the more excellent the steering stability is. Besides, the reference tire is a commercially available tire having the same tire size with a rolling resistance labeling of AA or higher, which has a lap time larger (slower) than that in Examples and Comparative examples.

$$\text{Steering stability} = [(\text{lap time for reference tire - lap time for test tire}) / (\text{lap time for reference tire - lap time for tire in Comparative example 1})] \times 100$$

Table 1

| | Tread first layer | Tread inner layer | | | | Sidewall |
|---|---|---|---|---|---|---|
| | A | B | C | D | E | F |
| Compounding amount (part by mass) | | | | | | |
| SBR1 | 40 | 70 | 60 | 40 | 60 | 0 |
| SBR2 | 55 | 13.75 | 0 | 0 | 0 | 96.25 |
| (Oil content) | (15) | (3.75) | (0) | (0) | (0) | (26.25) |
| BR1 | 10 | 20 | 30 | 30 | 20 | 10 |
| BR2 | 10 | 0 | 10 | 30 | 20 | 20 |
| Carbon black | 5 | 5 | 5 | 5 | 10 | 5 |
| Silica | 90 | 60 | 60 | 50 | 70 | 63 |
| (% by mass of silica to both silica and carbon black) | (95) | (92) | (92) | (91) | (88) | (93) |
| Silane coupling agent 1 | 0 | 0 | 0 | 5 | 7 | 6 |
| Silane coupling agent 2 | 10 | 6 | 5 | 0 | 0 | 0 |
| Oil | 5 | 5 | 10 | 5 | 5 | 0 |
| Antioxidant | 2 | 2 | 2 | 2 | 2 | 2 |
| Stearic acid | 2 | 2 | 2 | 2 | 2 | 2 |
| Zinc oxide | 2 | 2 | 2 | 2 | 2 | 2 |
| Resin | 10 | 0 | 0 | 0 | 8 | 0 |
| Sulfur | 1.5 | 1.5 | 1.5 | 1.5 | 1.5 | 1.5 |
| Vulcanization accelerator 1 | 2 | 2 | 2 | 2 | 2 | 2 |
| Vulcanization accelerator 2 | 2.5 | 2.5 | 2.5 | 2.5 | 2.5 | 2.5 |
| 30°C tan δ | 0.20 | 0.13 | 0.11 | 0.09 | 0.17 | 0.15 |

Table 2

| | Example | | | | | Comparative example | | | | |
|---|---|---|---|---|---|---|---|---|---|---|
| | 1 | 2 | 3 | 4 | 5 | 1 | 2 | 3 | 4 | 5 |
| Tire | | | | | | | | | | |
| Compounding | | | | | | | | | | |
| Tread first layer | A | A | A | A | A | A | A | A | A | A |
| Tread inner layer | B | C | D | D | D | B | B | E | E | B |
| Sidewall | F | F | F | F | F | F | F | F | F | F |
| Inequality (1) Sce/Sr | 0.45 | 0.45 | 0.45 | 0.70 | 0.45 | 0.83 | 0.45 | 0.30 | 0.45 | 0.30 |
| Inequality (2) 30°C tan $\delta_{BT}$/30°C tan $\delta_{SW}$ | 0.87 | 0.73 | 0.60 | 0.60 | 0.60 | 0.87 | 0.87 | 1.13 | 1.13 | 0.87 |
| H1/HT (%) height of extension end of tread inner layer | 50 | 50 | 50 | 50 | 35 | 50 | 90 | 90 | 50 | 50 |
| H2/HT (%) height of upper end of clinch | 25 | 25 | 25 | 25 | 60 | 25 | 25 | 25 | 25 | 25 |
| Inequality (3) 30°C tan $\delta_{BT}$ × (Sce/Sr) | 0.059 | 0.050 | 0.041 | 0.063 | 0.041 | 0.108 | 0.059 | 0.051 | 0.077 | 0.039 |
| Ratio of land part width to adjacent groove depth | 3.5 | 3.5 | 3.5 | 3.5 | 3.5 | 3.5 | 3.5 | 3.5 | 3.5 | 3.5 |
| θ(°) | 70 | 70 | 70 | 70 | 70 | 70 | 70 | 70 | 70 | 70 |
| Inequality (4) Lb/La | 5 | 5 | 5 | 5 | 5 | 5 | 5 | 5 | 5 | 5 |
| Inequality (5) Sg/St | 0.30 | 0.30 | 0.30 | 0.30 | 0.30 | 0.30 | 0.30 | 0.30 | 0.30 | 0.30 |
| Evaluation | | | | | | | | | | |
| Fuel efficiency (index) | 100 | 104 | 107 | 107 | 110 | 100 | 96 | 83 | 88 | 100 |
| Steering stability (index) | 106 | 108 | 110 | 103 | 113 | 100 | 104 | 95 | 105 | 95 |
| Overall performance (index) | 206 | 212 | 217 | 210 | 223 | 200 | 200 | 178 | 193 | 195 |

From the results in Table 2, it can be found that the tires of Examples show superior values compared to the tires of Comparative examples in overall performance indices obtained by summing a fuel efficiency index and a steering stability index, and have improved overall performance of fuel efficiency and steering stability.

EXPLANATION OF NUMERALS

1. Tread part
2. Sidewall part
3. Clinch

3E. Upper end of clinch

4. Carcass

11. Tread first layer

12. Tread inner layer

12E. End of tread inner layer

13, 14, 15. Circumferential groove

16. Outer shoulder land part

17. Inner shoulder land part
18. Outer center land part
19. Inner center land part
21. Outer shoulder width direction groove
22. Inner shoulder width direction groove
25. Outer center width direction groove
26. Inner center width direction groove
27. Outer center sipe
28. Inner center sipe
C. Tire equator
HT. Tire cross-sectional height
To. Outer tread end
Ti. Inner tread end
TW. Tread width
W. Tire width direction
Wt. Tire cross-sectional width

## Claims

**1.** A tire comprising a tread part (1) composed of two or more layers and a sidewall part (2),

the tread part (1) composed of two or more layers comprising at least a tread first layer (11) placed on the outermost side in a tire radial direction and a tread inner layer (12) placed inside in the tire radial direction,
wherein the end (12E) of the tread inner layer (12) extends into the sidewall part (2), and the tread inner layer (12) is placed inner side in a tire width direction with respect to a sidewall in the sidewall part (2),
wherein a grounding surface of the tread first layer (11) has two or more circumferential grooves (13, 14, 15), a pair of shoulder land parts (16, 17) and one or more of center land parts (18, 19), and width direction grooves (21, 22, 25, 26) or the width direction grooves (21, 22, 25, 26) and sipes (27, 28), the circumferential grooves (13, 14, 15) extending continuously in a tire circumferential direction, both the pair of shoulder land parts (16, 17) and the one or more of center land parts (18, 19) being partitioned by the circumferential grooves (13, 14, 15), the pair of shoulder land parts (16, 17) being partitioned by the two circumferential grooves (13, 14) arranged at outermost location in the tire width direction, and the center land parts (18, 19) being arranged between the pair of shoulder land parts (16, 17), and
wherein, where a loss tangent at 30°C of the rubber composition of the tread inner layer is defined as 30°C tan $\delta_{BT}$ and a loss tangent at 30°C of the rubber composition of the sidewall in the sidewall part is defined as 30°C tan $\delta_{SW}$, 30°C tan $\delta_{BT}$ and 30°C tan $\delta_{SW}$ satisfy the following inequality (2):

$$\text{Inequality (2): } 30°\text{C} \tan \delta_{BT} / 30°\text{C} \tan \delta_{SW} < 1,$$

**characterized in that**
where a total area of the land parts is defined as Sr and a total area of the center land parts (18, 19) is defined as Sce, Sr and See satisfy the following inequality (1):

$$\text{Inequality (1): } 0.35 \leq Sce/Sr \leq 0.80,$$

and
the 30°C tan $\delta_{BT}$, the Sr, and the See satisfy the following inequality (3):

$$\text{Inequality (3): } 30°\text{C} \tan \delta_{BT} \times (Sce/Sr) \leq 0.$$

15, wherein 30°C tan δ is a loss tangent measured under a condition of a temperature at 30°C, a frequency of 10 Hz, an initial strain of 10%, and a dynamic strain of 2%.

**2.** The tire of claim 1, wherein a value on the right side of the inequality (2) is 0.9.

**3.** The tire of claim 1, wherein a value on the right side of the inequality (2) is 0.8.

**4.** The tire of any one of claims 1 to 3, wherein a value on the right side of the inequality (3) is 0.05.

**5.** The tire of any one of claims 1 to 4, wherein a land part width of one independent center land part among the center land parts (18, 19) is twice or more a groove depth of at least one circumferential groove adjacent to the independent center land part outside in the tire width direction.

**6.** The tire of any one of claims 1 to 5, wherein the center land part (18, 19) has a sipe (27, 28) , the sipe (27, 28) extending so as to connect both edges in the width direction of the center land part (18, 19), and wherein an angle $\theta$ formed by a straight line connecting both ends in the width direction of the sipe (27, 28) of the center land part (18, 19) and the circumferential groove (13, 14, 15) is in a range of 65 to 80 degrees.

**7.** The tire of claim 6, wherein, where a length of the circumference of the tire is defined as La, and a sum of a total length of edge components in the width direction of the width direction grooves Lb1 and a total length of edge components in the width direction of the sipes Lb2 is defined as Lb, La and Lb satisfy the following inequality (4):

$$\text{Inequality (4): } 3 \leq Lb/La \leq 7$$

**8.** The tire of any one of claims 1 to 7, wherein, in a tread surface of the tread first layer (11), where a grounding surface area of the tread surface is defined as St, and a sum of a total area of the circumferential grooves Sg1 and a total area of the width direction grooves and the sipes Sg2 is defined as Sg, St and Sg satisfy the following inequality (5):

$$\text{Inequality (5): } 0.20 \leq Sg/St \leq 0.40$$

**9.** The tire of any one of claims 1 to 8, wherein 30°C tan $\delta_{BT}$ is 0.07 or more and 0.15 or less.

**10.** The tire of any one of claims 1 to 9, wherein 30°C tan $\delta_{SW}$ is 0.10 or more and 0.18 or less.

**11.** The tire of any one of claims 1 to 10, wherein the rubber composition of the tread inner layer (11) comprises silica and carbon black, and wherein a ratio of a content of the silica to a total content of the silica and the carbon black is 60% by mass or more.

**12.** The tire of any one of claims 1 to 11, wherein a height of the end of the tread inner layer (11) in a tire cross-sectional height is 33/40 or less the tire cross-sectional height (HT).

**13.** The tire of any one of claims 1 to 12, wherein the tire further comprises a clinch (3) and a carcass (4), and wherein the height of the end of the tread inner layer (12) in the tire cross-sectional height is higher than that of the upper end (3E) of the clinch (3) or, when the height of the end of the tread inner layer (12) is lower than that of the upper end (3E) of the clinch (3), the tread inner layer (12) is placed inner side in the tire width direction with respect to the clinch (3) via the carcass (4) between the tread inner layer (12) and the clinch (3).

**14.** The tire of any one of claims 1 to 13, wherein the tire is a pneumatic tire for a passenger car.

**Patentansprüche**

**1.** Reifen mit einem Laufflächenteil (1), der aus zwei oder mehr Schichten zusammengesetzt ist, und einem Seitenwandteil (2),

wobei der Laufflächenteil (1) aus zwei oder mehr Schichten zusammengesetzt ist, die mindestens eine erste Laufflächenschicht (11), die auf der Seite am weitesten außen in einer radialen Richtung des Reifens angeordnet ist, und eine Laufflächeninnenschicht (12), die in der radialen Richtung des Reifens innenseitig angeordnet ist, umfassen,
wobei sich das Ende (12E) der Laufflächeninnenschicht (12) in den Seitenwandteil (2) hinein erstreckt und die Laufflächeninnenschicht (12) in einer Richtung der Breite des Reifens in Bezug auf eine Seitenwand in dem

Seitenwandteil (2) innenseitig angeordnet ist,
wobei eine Bodenkontaktfläche der ersten Laufflächenschicht (11) zwei oder mehr Umfangsrillen (13, 14, 15), ein Paar Schulterlandteile (16, 17) und einen oder mehrere mittlere Landteile (18, 19) und Rillen in der Richtung der Breite (21, 22, 25, 26) oder die Rillen in der Richtung der Breite (21, 22, 25, 26) und die Feinschnitte (27, 28) aufweist, die Umfangsrillen (13, 14, 15) sich kontinuierlich in einer Umfangsrichtung des Reifens erstrecken, sowohl das Paar Schulterlandteile (16, 17) als auch der eine oder die mehreren mittleren Landteile (18, 19) durch die Umfangsrillen (13, 14, 15) unterteilt sind, wobei das Paar Schulterlandteile (16, 17) durch die zwei Umfangsrillen (13, 14) unterteilt ist, die an einer Stelle am weitesten außen in Richtung der Breite des Reifens angeordnet sind, und die mittleren Landteile (18, 19) zwischen dem Paar Schulterlandteilen (16, 17) angeordnet sind, und
wobei, wenn ein Verlusttangens bei 30°C der Gummimischung der Laufflächeninnenschicht als 30°C tan $\delta_{BT}$ definiert ist und ein Verlusttangens bei 30°C der Gummimischung der Seitenwand in dem Seitenwandteil als 30°C tan $\delta_{SW}$ definiert ist, 30°C tan $\delta_{BT}$ und 30°C tan $\delta_{SW}$ die folgende Ungleichung (2) erfüllen:

$$\text{Ungleichung (2): } 30°C \tan \delta_{BT}/30°C \tan \delta_{SW}<1,$$

**dadurch gekennzeichnet, dass**,
wenn eine Gesamtfläche der Landteile als Sr definiert ist und eine Gesamtfläche der mittleren Landteile (18, 19) als Sce definiert ist, Sr und Sce die folgende Ungleichung (1) erfüllen:

$$\text{Ungleichung (1): } 0{,}35\leq Sce/Sr\leq 0{,}80,$$

der 30°C tan $\delta_{BT}$, der Sr und der Sce die folgende Ungleichung (3) erfüllen:

$$\text{Ungleichung (3): } 30°C \tan \delta_{BT} \times (Sce/Sr)\leq 0{,}15,$$

wobei 30°C tan $\delta$ ein Verlusttangens ist, der unter einer Bedingung einer Temperatur von 30°C, einer Frequenz von 10 Hz, einer Anfangsdehnung von 10 % und einer dynamischen Dehnung von 2 % gemessen ist.

**2.** Reifen nach Anspruch 1, wobei ein Wert auf der rechten Seite der Ungleichung (2) 0,9 beträgt.

**3.** Reifen nach Anspruch 1, wobei ein Wert auf der rechten Seite der Ungleichung (2) 0,8 beträgt.

**4.** Reifen nach einem der Ansprüche 1 bis 3, wobei ein Wert auf der rechten Seite der Ungleichung (3) 0,05 beträgt.

**5.** Reifen nach einem der Ansprüche 1 bis 4, wobei eine Landteilbreite eines unabhängigen mittleren Landteils unter den mittleren Landteilen (18, 19) das Doppelte oder mehr einer Rillentiefe von mindestens einer Umfangsrille benachbart zu dem unabhängigen mittleren Landteil außenseitig in der Richtung der Breite des Reifens beträgt.

**6.** Reifen nach einem der Ansprüche 1 bis 5, wobei der mittlere Landteil (18, 19) einen Feinschnitt (27, 28) aufweist, der Feinschnitt (27, 28) sich so erstreckt, dass er beide Ränder in der Richtung der Breite des mittleren Landteils (18, 19) verbindet, und wobei ein Winkel $\theta$, der durch eine gerade Linie gebildet ist, die beide Enden in der Richtung der Breite des Feinschnitts (27, 28) des mittleren Landteils (18, 19) und der Umfangsrille (13, 14, 15) verbindet, in einem Bereich von 65 bis 80 Grad liegt.

**7.** Reifen nach Anspruch 6, wobei, wenn eine Länge des Umfangs des Reifens als La definiert ist, und eine Summe einer Gesamtlänge von Randkomponenten in der Richtung der Breite der Rillen in der Richtung der Breite Lb1 und einer Gesamtlänge von Randkomponenten in der Richtung der Breite der Feinschnitte Lb2 als Lb definiert ist, La und Lb die folgende Ungleichung (4) erfüllen:

$$\text{Ungleichung (4): } 3\leq Lb/La\leq 7$$

**8.** Reifen nach einem der Ansprüche 1 bis 7, wobei in einer Laufflächenoberfläche der ersten Laufflächenschicht (11), bei der eine Bodenkontaktfläche der Laufflächenoberfläche als St definiert ist, und eine Summe einer Gesamtfläche

der Umfangsrillen Sg1 und einer Gesamtfläche der Rillen in der Richtung der Breite und der Feinschnitte Sg2 als Sg definiert ist, St und Sg die folgende Ungleichung (5) erfüllen:

$$\text{Ungleichung (5): } 0{,}20 \leq Sg/St \leq 0{,}40$$

9. Reifen nach einem der Ansprüche 1 bis 8, wobei 30°C tan $\delta_{BT}$ 0,07 oder mehr und 0,15 oder weniger beträgt.

10. Reifen nach einem der Ansprüche 1 bis 9, wobei 30°C tan $\delta_{SW}$ 0,10 oder mehr und 0,18 oder weniger beträgt.

11. Reifen nach einem der Ansprüche 1 bis 10, wobei die Gummimischung der Laufflächeninnenschicht (11) Silika und Ruß umfasst, und wobei das Verhältnis eines Gehalts des Silikas zu einem Gesamtgehalt des Silikas und des Rußes 60 Massenprozent oder mehr beträgt.

12. Reifen nach einem der Ansprüche 1 bis 11, wobei eine Höhe des Endes der Laufflächeninnenschicht (11) in einer Querschnittshöhe des Reifens 33/40 oder weniger der Querschnittshöhe des Reifens (HT) beträgt.

13. Reifen nach einem der Ansprüche 1 bis 12, wobei der Reifen außerdem ein Wulstband (3) und eine Karkasse (4) umfasst, und wobei die Höhe des Endes der Laufflächeninnenschicht (12) in der Querschnittshöhe des Reifens höher ist als die des oberen Endes (3E) des Wulstbandes (3) oder, wenn die Höhe des Endes der Laufflächeninnenschicht (12) geringer ist als die des oberen Endes (3E) des Wulstbandes (3), die Laufflächeninnenschicht (12) in der Richtung der Breite des Reifens in Bezug auf das Wulstband (3) über die Karkasse (4) zwischen der Laufflächeninnenschicht (12) und dem Wulstband (3) innenseitig angeordnet ist.

14. Reifen nach einem der Ansprüche 1 bis 13, wobei der Reifen ein Luftreifen für einen Personenkraftwagen ist.

## Revendications

1. Pneumatique comprenant une partie formant bande de roulement (1) composée de deux ou plusieurs couches et une partie formant paroi latérale (2),

la partie formant bande de roulement (1) composée de deux ou plusieurs couches comprenant au moins une première couche de bande de roulement (11) placée sur le côté le plus extérieur dans une direction radiale du pneumatique et une couche intérieure de bande de roulement (12) placée à l'intérieur dans la direction radiale du pneumatique,
dans lequel l'extrémité (12E) de la couche intérieure de bande de roulement (12) s'étend jusque dans la partie formant paroi latérale (2), et la couche intérieure de bande de roulement (12) est placée côté intérieur dans une direction de la largeur du pneumatique par rapport à une paroi latérale dans la partie formant paroi latérale (2),
dans lequel une surface de contact au sol de la première couche de bande de roulement (11) a deux ou plusieurs rainures circonférentielles (13, 14, 15), une paire de parties en relief d'épaulement (16, 17) et une ou plusieurs parties en relief centrales (18, 19), et des rainures en direction de la largeur (21, 22, 25, 26) ou les rainures en direction de la largeur (21, 22, 25, 26) et des fentes (27, 28), les rainures circonférentielles (13, 14, 15) s'étendant en continu dans une direction circonférentielle du pneumatique, à la fois la paire de parties en relief d'épaulement (16, 17) et lesdites une ou plusieurs parties en relief centrales (18, 19) étant partitionnées par les rainures circonférentielles (13, 14, 15), la paire de parties en relief d'épaulement (16, 17) étant partitionnées par les deux rainures circonférentielles (13, 14) agencées à un emplacement le plus à l'extérieur dans la direction de la largeur du pneumatique, et les parties en relief centrales (18, 19) étant agencées entre la paire de parties en relief d'épaulement (16, 17), et
dans lequel, une tangente de perte à 30 °C de la composition de caoutchouc de la couche intérieure de bande de roulement étant définie comme 30 °C tan $\delta_{BT}$ et une tangente de perte à 30 °C de la composition de caoutchouc de la paroi latérale dans la partie formant paroi latérale étant définie comme 30 °C tan $\delta_{SW}$, 30 °C tan $\delta_{BT}$ et 30 °C tan $\delta_{SW}$ satisfont l'inégalité (2) suivante :

$$\text{Inégalité (2) : } 30\ °C \tan \delta_{BT} / 30\ °C \tan \delta_{SW} < 1,$$

**caractérisé en ce que**

une aire totale des parties en relief étant définie comme Sr et une aire totale des parties en relief centrales (18, 19) étant définie comme Sce, Sr et Sce satisfont l'inégalité (1) suivante :

$$\text{Inégalité (1) : } 0{,}35 \leq Sce/Sr \leq 080,$$

et 30 °C tan $\delta_{BT}$, Sr et Sce satisfont l'inégalité (3) suivante :

$$\text{Inégalité (3) : } 30\ °C \tan \delta_{BT} \times (Sce/Sr) \leq 0{,}15,$$

dans lequel 30 °C tan $\delta$ est une tangente de perte mesurée sous une condition d'une température à 30 °C, d'une fréquence de 10 Hz, d'une contrainte initiale de 10 % et d'une contrainte dynamique de 2 %.

**2.** Pneumatique selon la revendication 1, dans lequel une valeur sur le côté de droite de l'inégalité (2) est 0,9.

**3.** Pneumatique selon la revendication 1, dans lequel une valeur sur le côté de droite de l'inégalité (2) est 0,8.

**4.** Pneumatique selon l'une quelconque des revendications 1 à 3, dans lequel une valeur sur le côté de droite de l'inégalité (3) est 0,05.

**5.** Pneumatique selon l'une quelconque des revendications 1 à 4, dans lequel une largeur de partie en relief d'une partie en relief centrale indépendante parmi les parties en relief centrales (18, 19) est deux fois ou plus une profondeur de rainure d'au moins une rainure circonférentielle adjacente à la partie en relief centrale indépendante à l'extérieur dans la direction de la largeur du pneumatique.

**6.** Pneumatique selon l'une quelconque des revendications 1 à 5, dans lequel la partie en relief central (18, 19) a une fente (27, 28), la fente (27, 28) s'étendant de manière à connecter les deux bords dans la direction de la largeur de la partie en relief centrale (18, 19), et dans lequel un angle $\theta$ formé par une ligne droite connectant les deux extrémités dans la direction de la largeur de la fente (27, 28) de la partie en relief centrale (18, 19) et la rainure circonférentielle (13, 14, 15) est dans une plage de 65 à 80 degrés.

**7.** Pneumatique selon la revendication 6, dans lequel, une longueur de la circonférence du pneumatique étant définie comme La, et une somme d'une longueur totale de composants de bord dans la direction de la largeur des rainures en direction de la largeur Lb1 et d'une longueur totale de composants de bord dans la direction de la largeur des fentes Lb2 étant définie comme Lb, La et Lb satisfont l'inégalité (4) suivante :

$$\text{Inégalité (4) : } 3 \leq Lb/La \leq 7.$$

**8.** Pneumatique selon l'une quelconque des revendications 1 à 7, dans lequel, dans une surface de bande de roulement de la première couche de bande de roulement (11), une aire de surface de contact au sol de la surface de bande de roulement étant définie comme St, et une somme d'une aire totale des rainures circonférentielles Sg1 et d'une aire totale des rainures en direction de la largeur et des fentes Sg2 étant définie comme Sg, St et Sg satisfont l'inégalité (5) suivante :

$$\text{Inégalité (5) : } 0{,}20 \leq Sg/St \leq 0{,}40.$$

**9.** Pneumatique selon l'une quelconque des revendications 1 à 8, dans lequel 30 °C tan $\delta_{BT}$ est 0,07 ou plus et 0,15 ou moins.

**10.** Pneumatique selon l'une quelconque des revendications 1 à 9, dans lequel 30 °C tan $\delta_{SW}$ est 0,10 ou plus et 0,18 ou moins.

**11.** Pneumatique selon l'une quelconque des revendications 1 à 10, dans lequel la composition de caoutchouc de la couche intérieure de bande de roulement (11) comprend de la silice et du noir de carbone, et dans lequel un rapport d'une teneur de la silice sur une teneur totale de la silice et du noir de carbone est 60 % en masse ou plus.

**12.** Pneumatique selon l'une quelconque des revendications 1 à 11, dans lequel une hauteur de l'extrémité de la couche intérieure de bande de roulement (11) dans une hauteur de section transversale est 33/40 ou moins de la hauteur de section transversale (HT) du pneumatique.

**13.** Pneumatique selon l'une quelconque des revendications 1 à 12, dans lequel le pneumatique comprend en outre une coiffe de talon (3) et une carcasse (4), et dans lequel la hauteur de l'extrémité de la couche intérieure de bande de roulement (12) dans la hauteur de section transversale du pneumatique est plus élevée que celle de l'extrémité supérieure (3E) de la coiffe de talon (3) ou, quand la hauteur de l'extrémité de la couche intérieure de bande de roulement (12) est plus basse que celle de l'extrémité supérieure (3E) de la coiffe de talon (3), la couche intérieure de bande de roulement (12) est placée côté intérieur dans la direction de la largeur du pneumatique par rapport à la coiffe de talon (3) via la carcasse (4) entre la couche intérieure de bande de roulement (12) et la coiffe de talon (3).

**14.** Pneumatique selon l'une quelconque des revendications 1 à 13, dans lequel le pneumatique est un bandage pneumatique pour une voiture particulière.

FIG. 1

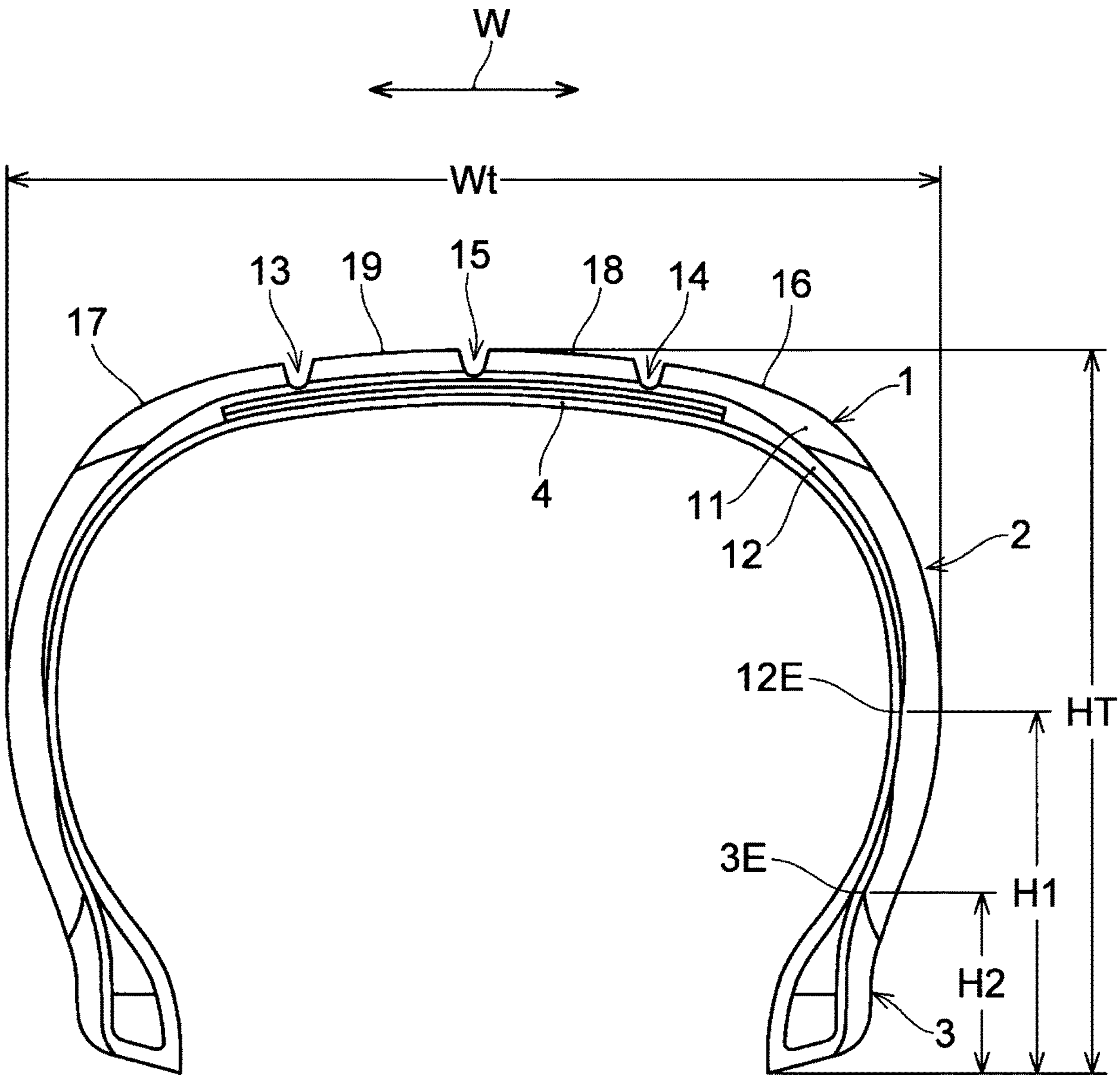

FIG. 2

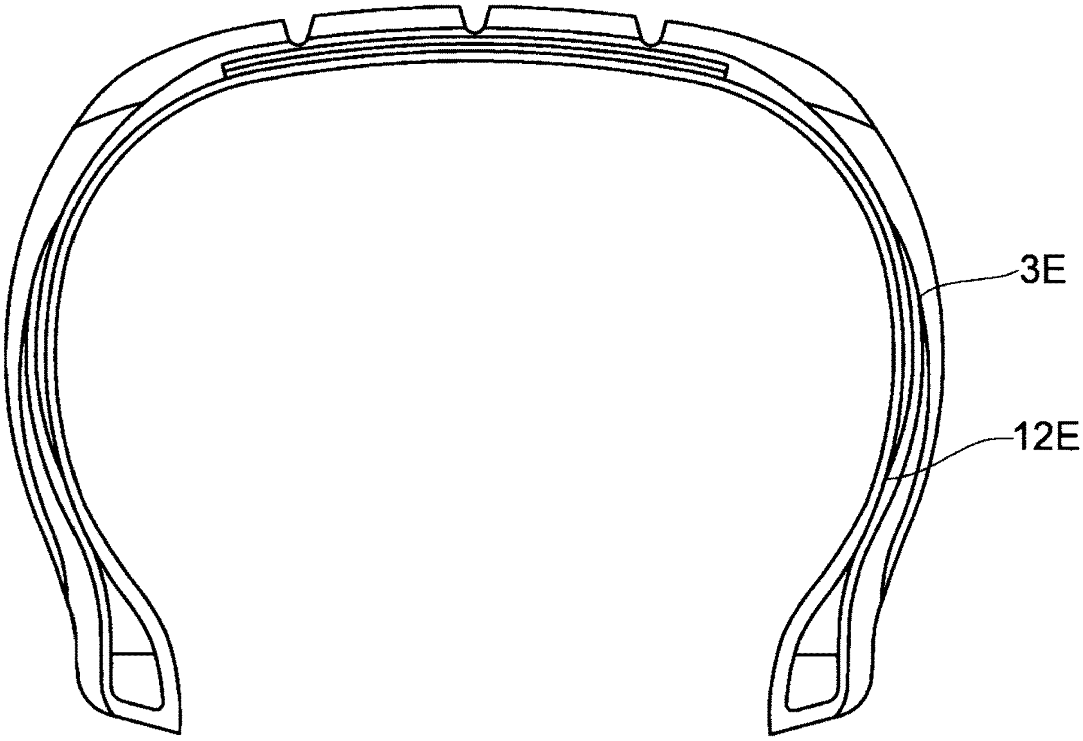


FIG. 3

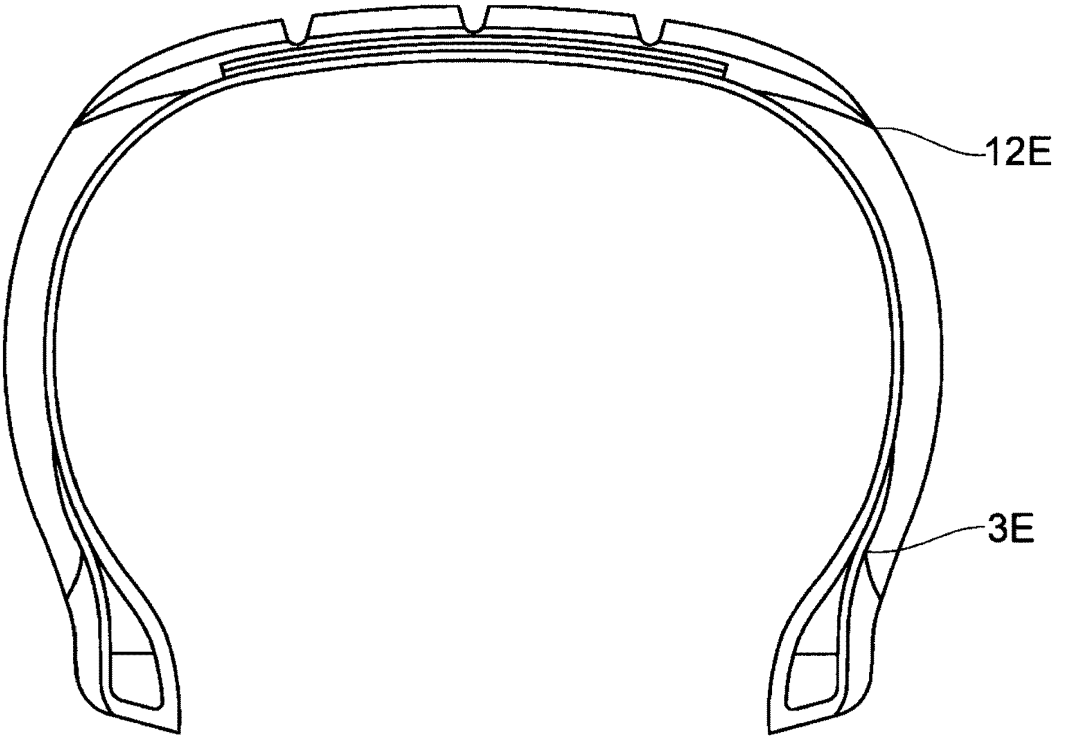

FIG. 4

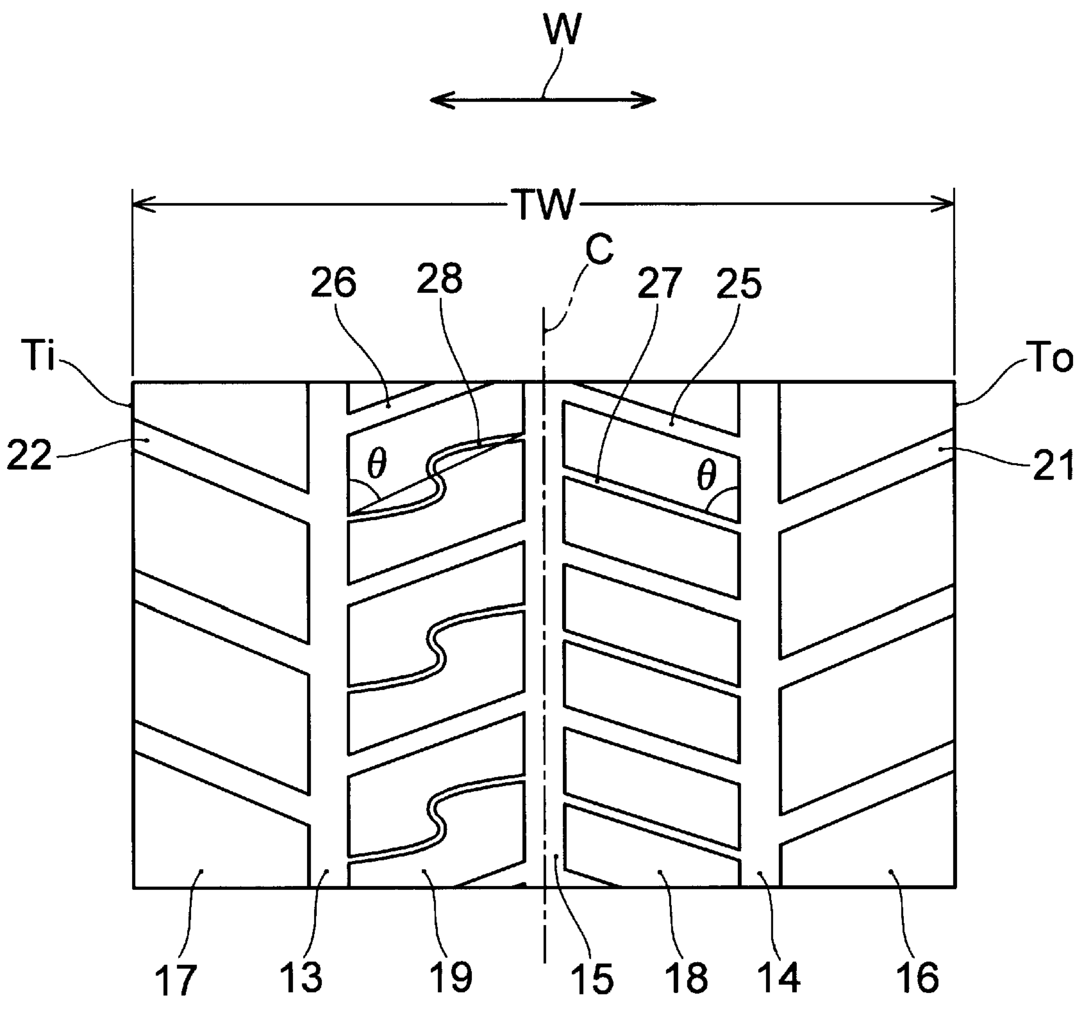

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003012866 A
- WO 2019244912 A1
- EP 2799247 A2
- WO 2018118023 A1